# EUROPÄISCHE PATENTSCHRIFT

(11) **EP 1 738 819 B1**
(45) Veröffentlichungstag und Bekanntmachung des Hinweises auf die Patenterteilung: **01.09.2010**
(21) Anmeldenummer: 05013078.0
(22) Anmeldetag: 17.06.2005
(51) Int. Cl.: B01D 53/86, F28D 9/00

(54) **Vorrichtung zur katalytischen Reinigung von Abgasen**
Apparatus for the catalytic purification of exhaust gases
Dispositif pour la purification catalytique de gaz d'échappement

(43) Veröffentlichungstag der Anmeldung: 03.01.2007
(73) Patentinhaber: BD Heat Recovery Inc., Seminole, FL 33772 (US)
(72) Erfinder: Brasseur, Olivier, 40880 Ratingen (DE)
(74) Vertreter: Stenger, Watzke & Ring

(56) Entgegenhaltungen:
- EP-A- 0 364 617
- EP-A- 0 548 604

## Beschreibung

Die vorliegende Erfindung bezieht sich auf eine Vorrichtung zur katalytischen. Reinigung von Abgasen, insbesondere zur Entstickung von Rauchgasen.

Eine bekannte Variante einer solchen Vorrichtung zur katalytischen Reinigung von Abgasen umfasst einen Regenerativ-Wärmetauscher, eine Heizeinrichtung, eine Ammoniakzuführeinrichtung und Katalysatoren, die der Reihe nach von dem das Kraftwerk verlassenden zu reinigendem Rohgas durchströmt werden. Das die Katalysatoren verlassende gereinigte Reingas wird erneut durch den Wärmetauscher geleitet und verlässt anschließend die Vorrichtung. Genauer gesagt wird das zu reinigende Rohgas im Regenerativ-Wärmetauscher, dessen wärmeübertragende Flächen durch das aus den Katalysatoren austreten der gereinigte Reingas aufgeheizt werden, zunächst vorgewärmt und anschließend der Heizeinrichtung zugeführt, in der es auf die für den Betrieb der Katalysatoren notwendige Temperatur gebracht wird. Nach Durchströmen der Heizeinrichtung wird dem Rohgas über die Ammoniak-Zuführeinrichtung Ammoniak zugesetzt, woraufhin das Gas nach entsprechender Durchmischung zu den Katalysatoren gelangt, wo es entsprechend entstickt wird. Das die Katalysatoren verlassende Reingas wird dann dem Regenerativ-Wärmetauscher zugeführt, den es unter Aufheizung der Heizflächen durchströmt und schließlich die Vorrichtung verlässt.

Aus der EP-A1-0 364 617 ist eine gattungsgemäße Vorrichtung bekannt geworden. Für den Wärmeaustausch zwischen Roh- und Reingas kommt gemäß dieser Vorrichtung ein im Kreuz-Gegenstrom arbeitender Plattenwärmetauscher zum Einsatz.

Die EP-A1-0548 604 betrifft einen Plattenwärmetauscher als solchen, und zwar einen für im Gleichstrom oder Gegenstrom geführte Medien.

Es ist stets wünschenswert, bereits bekannte Vorrichtungen vorteilhaft zu modifizieren.

Es ist daher eine A u f g a b e der vorliegenden Erfindung, eine Vorrichtung zur katalytischen Reinigung von Abgasen zu schaffen, die gegenüber herkömmlichen Vorrichtungen eine geringere Baugröße aufweist und deren Betrieb eine verringerte Fremdenergiezufuhr erfordert.

Diese Aufgabe wird gemäß der vorliegenden Erfindung durch eine Vorrichtung zur katalytischen Reinigung von Abgasen nach Anspruch 1 g e l ö s t.

Die Vorrichtung gemäß der vorliegenden Erfindung umfaßt einen im Gegenstrom betriebenen Wärmetauscher zum Wärmeaustausch zwischen bereits gereinigtem Reingas und zu reinigendem Rohgas. Die Heizflächen des Wärmetauschers werden auch hier durch das die Katalysatoren verlassende Reingas aufgeheizt, so daß Wärme an das zu reinigende Rohgas abgegeben werden kann. Der Betrieb des Wärmetauschers erfolgt erfindungsgemäß im Gegenstrom. Das bedeutet, daß der Wärmetauscher derart ausgebildet ist, daß sich das zu reinigende Rohgas und das bereits gereinigte Reingas innerhalb des Wärmetauschers und somit zum Zeitpunkt des Wärmeübergangs in zueinander entgegengesetzte Richtungen bewegen. An den Wärmetauscher schließt sich ein Aufheizkanal an, in dem dem Rohgas zusätzliche Wärme zugeführt wird, um das Rohgas auf die für den Betrieb der Katalysatoren notwendige Temperatur zu bringen. Ferner ist in dem Aufheizkanal eine Eindüsungseinrichtung für die Zuführung von Ammoniak vorgesehen, um dem zu reinigendem Rohgas Ammoniak zuzusetzen. An das Ende des Aufheizkanals schließt eine im wesentlichen U-förmig ausgebildete Umlenkhaube an, mit der das zu reinigende Rohgas in Richtung der in Strömungsrichtung hinter der Umlenkhaube vorgesehenen Katalysatoranordnung umgelenkt wird. Das die Katalysatoranordnung verlassende Reingas durchströmt erneut den Wärmetauscher, wo es unter Aufheizung der Wärmetauscherheizflächen das zu reinigende Rohgas im Gegenstrom erwärmt.

Ein Vorteil der erfindungsgemäßen Vorrichtung zur katalytischen Reinigung von Kraftwerksabgasen gegenüber herkömmlichen Vorrichtungen besteht darin, daß ein Wärmetauscher verwendet wird, der im Gegenstrom betrieben wird. Solche im Gegenstrom betriebenen Wärmetauscher können zum einen konstruktiv einfach und somit preiswert gestaltet werden. Ferner erfordern sie nur einen geringen Bauraum und weisen zudem einen hohen Leistungsgrad auf. Entsprechend kann die erfindungsgemäße Vorrichtung insgesamt kleiner ausfallen. Ferner muß im Aufheizkanal weniger Fremdenergie zugeführt werden, um das zu reinigende Rohgas auf die für den Betrieb der Katalysatoren erforderliche Temperatur zu bringen.

Bei der im Aufheizkanal vorgesehenen Heizeinrichtung handelt es sich bevorzugt um einen dampfbeheizten Gasvorwärmer, einen Gasbrenner oder eine Einrichtung zur Einmischung heißer Gase.

Ferner ist es bevorzugt, daß die Zusetzung von Ammoniak mit Hilfe einer entsprechenden Eindüsungseinrichtung erfolgt, die in Strömungsrichtung des zu reinigenden Rohgases hinter der Heizeinrichtung im Aufheizkanal angeordnet ist.

In dem Aufheizkanal ist vorteilhaft eine Mischeinrichtung zur Durchmischung des Rauchgases mit dem zugeführten Ammoniak vorgesehen. Bei dieser Mischeinrichtung handelt es sich bevorzugt um wenigstens einen Strömungseinbau in Form einer Wirbeleinbaufläche oder dergleichen, in die in Strömungsrichtung hinter der Eindüsungseinrichtung angeordnet ist.

Die Umlenkhaube ist bevorzugt mit einem Strömungsquerschnitt ausgebildet, der im wesentlichen dem Querschnitt der in der Katalysatoranordnung vorgesehenen Katalysatoren entspricht, um einem Druckverlust vorzubeugen.

In der Umlenkhaube ist ferner bevorzugt zumindest ein Strömungseinbau in Form einer Wirbeleinbaufläche zur Ausbildung eines gleichmäßigeren Strömungsprofils des zu reinigenden Rohgases angeordnet. Auf diese Weise wird sichergestellt, daß ein Rohgasstrom mit gleichmäßigen Strömungsprofil in die Katalysatoranordnung eintritt, wodurch der Entstickungsprozeß verbessert wird.

Ferner ist der Aufheizkanal bevorzugt über Kompensatoren an der Umlenkhaube und an dem Wärmetauscher angeordnet, um thermischen Verzug zu kompensieren.

Bei dem im Gegenstrom betriebenen Wärmetauscher handelt es sich bevorzugt um einen Plattenwärmetauscher, der formgeprägte Einzelplatten umfaßt, die miteinander zu einen Strömungskanal für das eine Medium bildenden Plattenpaaren verbunden sind, die ihrerseits zu einem Plattenstapel zusammengefügt sind und zwischen sich jeweils einen Strömungskanal für das andere Medium bilden, wobei der Zu- und Abströmquerschnitt jedes Strömungskanals in Hauptströmrichtung diagonal zueinander versetzt sind und die Zu- und Abströmquerschnitte der Kanäle für die beiden Medien nebeneinander liegen, jedoch um die halbe Höhe des Zu- bzw. Abströmquerschnittes der Kanäle zueinander versetzt sind, wobei eine Mehrzahl gleichartiger Plattenstapel unmittelbar nebeneinander angeordnet ist, die Zu- und Abströmquerschnitte jedes Plattenstapels durch eine über die gesamte Stapellänge verlaufende Mittelwand voneinander getrennt sind, die Mittelwände benachbarter Plattenstapel jeweils durch eine Deckenwand zu einem gemeinsamen Sammelkanal verbunden sind und diese Sammelkanäle abwechselnd und unter Einbeziehung der Zu- bzw. Abströmquerschnitte der beiden endseitigen Plattenstapel mit einem gemeinsamen Zuström- bzw. Abströmstutzen für jeweils eines der beiden Medien verbunden sind.

Dabei sind der Zuströmstutzen und der Abströmstutzen für jedes Medium jeweils am anderen Ende der nebeneinander liegenden Plattenstapel angeordnet.

Die Deckenwände der Sammelkanäle des Plattenwärmetauschers sind bevorzugt schrägverlaufend ausgebildet.

Nachfolgend wird die vorliegende Erfindung anhand eines Ausführungsbeispiels und unter Bezugnahme auf die Zeichnung genauer beschrieben. Darin ist
- Fig. 1:: eine schematische Seitenansicht eines Ausführungsbeispiels der erfindungsgemäßen Vorrichtung;
- Fig. 2:: eine perspektivische Ansicht eines Teils eines aus mehreren Platten gebildeten Plattenstapels eines Ausführungsbeispiels eines im Gegenstrom betriebenen Wärmetauschers; und
- Fig. 3:: eine perspektivische Ansicht eines Ausführungsbeispiels eines im Gegenstrom betriebenen Wärmetauschers, der in der in Fig. 1 dargestellten Vorrichtung Verwendung findet.

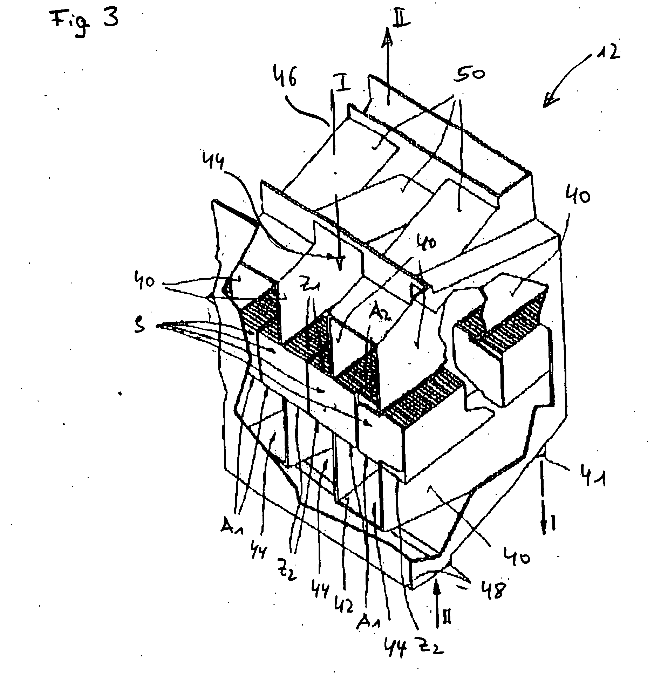

Die in der Zeichnung dargestellte Vorrichtung 10 dient dem Entsticken von Abgasen, die nachfolgend als Rohgas bezeichnet werden. Die Vorrichtung 10 umfaßt einen im Gegenstrom betriebenen Wärmetauscher 12 zum Aufheizen des Rohgases, einen Aufheizkanal 14, in dem das Rohgas weiter erwärmt wird, und eine Katalysatoranordnung 16 zur Entstickung des Rohgases. Das zu reinigende Rohgas tritt durch eine Eintrittsöffnung 18 in die Vorrichtung 10 ein und durchströmt zunächst den Wärmetauscher 12, wobei es durch die von dem die Katalysatoranordnung 16 verlassenden Reingas an den Wärmetauscher abgegebene Wärme erhitzt wird. Das die Katalysatoranordnung 16 verlassende Reingas durchströmt den Wärmetauscher 12 von oben nach unten, also in vertikaler Abwärtsrichtung und heizt dabei Heizflächen des Wärmetauschers 12 auf, während das zu reinigende Rohgas von unten nach oben, also in vertikaler Aufwärtsrichtung durch den Wärmetauscher 12 geleitet wird. Das Reingas und das Rohgas sind innerhalb des Wärmetauschers 12 derart geführt, daß sie stets in zueinander entgegengesetzten Richtungen strömen, was als Gegenstrombetrieb bezeichnet wird und unter Bezugnahme auf Fig. 3 noch näher erläutert wird. Das aufgeheizte Rohgas wird nach Verlassen des Wärmetauschers 12 in den Aufheizkanal 14 geleitet, wo es mit Hilfe einer nicht näher dargestellten Aufheizeinrichtung 20 weiter auf die für den Betrieb der Katalysatoranordnung 16 erforderliche Temperatur erhitzt wird. Bei der Heizeinrichtung 20 kann es sich beispielsweise um einen dampfbeheizten Gasvorwärmer handeln, der den Vorteil aufweist, daß keine zusätzlichen Abgase anfallen, wodurch sich der Entstickungsgrad entsprechend verbessert. Alternativ kann als Heizeinrichtung 20 aber auch ein Gasbrenner oder eine Einrichtung zur Einmischung heißer Gase vorgesehen sein.

Das die Heizeinrichtung 20 verlassende Rohgas strömt weiter aufwärts durch den Aufheizkanal 14 und trifft dort auf eine Mischeinrichtung 22, die in der Zeichnung schematisch als Wirbeleinbaufläche dargestellt ist. Durch die Mischeinrichtung 22 werden in dem Rohgas Verwirbelungen erzeugt. In Richtung der Mischeinrichtung 22 wird ferner mittels einer nicht näher dargestellten Eindüsungseinrichtung Ammoniak eingeleitet, das ebenfalls an der Wirbeleinbaufläche verwirbelt wird und sich entsprechend mit dem Rohgas vermischt. Die Mischeinrichtung 22 dient im wesentlichen dazu, eine ordnungsgemäße Durchmischung von Rohgas und Ammoniak sicherzustellen. Das Rohgas-Ammoniak-Gemisch strömt von der Mischeinrichtung 22 weiter aufwärts und wird am oberen Ende der Vorrichtung 10 durch eine U-förmig ausgebildete Umlenkhaube abwärts in Richtung der Katalysatoranordnung 16 gelenkt. Die Umlenkhaube 24 umfaßt dabei einen Strömungsquerschnitt, der dem Querschnitt der in der Katalysatoranordnung 16 vorgesehenen Katalysatoren entspricht, so daß keine Druckverluste in der Umlenkhaube 24 entstehen. Die Umlenkhaube 24 kann ferner Strömungseinbauten umfassen, die beispielsweise ebenfalls in Form von Wirbeleinbauflächen vorgesehen sind, was in der Zeichnung jedoch nicht näher gezeigt ist. Durch Vorsehen von Strömungseinbauten in der Umlenkhaube 24 kann das Strömungsprofil des Rohgas-Ammoniak-Gemisches gleichmäßig eingestellt werden, bevor das Gemisch in die Katalysatoranordnung 16 eintritt.

In der Katalysatoranordnung 16 wird das Rohgas-Ammoniak-Gemisch schließlich entstickt und verläßt diese in vertikaler Abwärtsrichtung als Reingas. Das Reingas durchströmt dann den Wärmetauscher 12 von oben nach unten und erhitzt dabei dessen Heizflächen, die wiederum Wärme an das den Wärmetauscher 12 von unten nach oben durchströmende Rohgas abgeben. Das den Wärmetauscher 12 in vertikaler Abwärtsrichtung verlassende Reingas verläßt die Vorrichtung 10 schließlich durch eine Auslaßöffnung 26.

Wesentliche Vorteile der zuvor beschriebenen Vorrichtung 10 zur katalytischen Reinigung von Abgasen gegenüber bekannten Vorrichtungen bestehen zum einen in Bezug auf den geringen Bauraum, der für die Vorrichtung 10 erforderlich ist, hinsichtlich der reduzierten Fremdenergie, die der Heizeinrichtung 20 aufgrund des sehr guten Wirkungsgrades des im Gegenstrom betriebenen Wärmetauschers 12 zugeführt werden muß, sowie bezüglich der insgesamt einfachen konstruktiven Ausgestaltung der Vorrichtung 10.

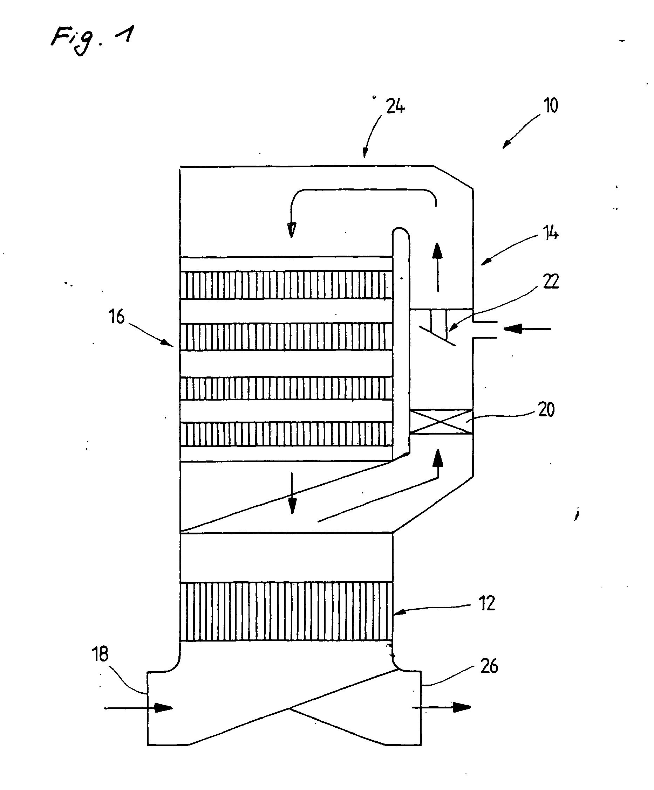

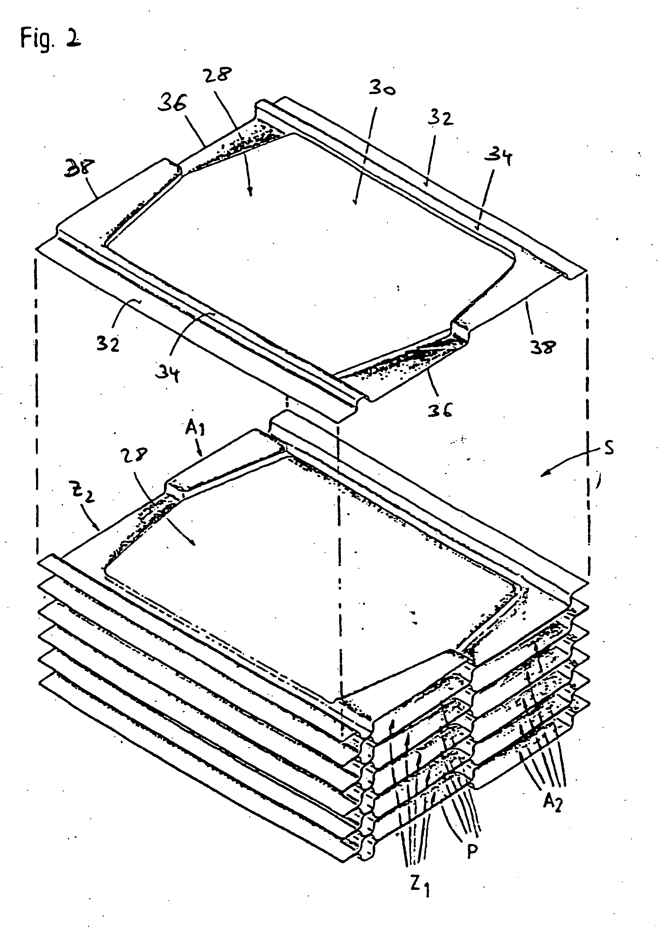

Fig. 2 ist eine perspektivische Ansicht eines Teils eines aus mehreren Einzelplatten 28 gebildeten Plattenstapels S eines Ausführungsbeispiels eines im Gegenstrom betriebenen Wärmetauschers 12, der in der in Fig. 1 dargestellten Vorrichtung 10 Verwendung findet. Der Plattenstapel S umfaßt eine Mehrzahl von Einzelplatten 28, die jeweils miteinander zu einem Plattenpaar P verbunden sind.

Jede einzelne Platte 28 weist einen Boden 30 auf, der in einer anderen Ebene liegt als die Längsränder 32. Im Anschluß und parallel zu diesen Längsrändern 32 ist jede einzelne Platte 28 jeweils mit einer Anlagefläche 34 ausgebildet, die gegenüber den Längsrändern 32 in der Höhe versetzt ist. Der Versatz zwischen der Anlagefläche 34 und dem zugehörigen Längsrand 32 ist doppelt so groß wie der Versatz zwischen den Längsrändern 32 und dem Boden 30. Der Boden 30 liegt demzufolge höhenmäßig in der Mitte zwischen der Ebene der Längsränder 32 und der Ebene der Anlageflächen 34.

Die quer zu den Längsrändern 32 der Einzelplatte 28 verlaufenden Ränder liegen beim Ausführungsbeispiel etwa zur Hälfte in der Ebene der Längsränder 32 bzw. in der Ebene der Anlageflächen 34. Auf diese Weise ergeben sich Querränder 36 und 38, die in der Höhe, d. h. senkrecht zur Fläche des Bodens 30 um denselben Betrag zueinander versetzt sind wie die Ebenen, in denen einerseits die Längsränder 32 und andererseits die Anlageflächen 34 liegen. In Fig. 2 ist deutlich zu erkennen, daß hierbei die Querränder 36 einander diagonal gegenüberliegen, ebenso wie die Querränder 38.

Jeweils zwei der in Fig. 2 als oberstes Teil dargestellten Einzelplatten 28 werden gemäß der unteren Darstellung in Fig. 2 zu Plattenpaaren P verbunden. In Fig. 2 sind fünf komplette Plattenpaare P dargestellt, wobei auf dem obersten Plattenpaar noch eine Einzelplatte 28 angeordnet ist, die mit der im Abstand dargestellten obersten Einzelplatte 28 ebenfalls zu einem Plattenpaar P verbunden wird.

Wenn die Plattenpaare P im Bereich der Anlageflächen 34 zum Plattenstapel S verbunden werden, ergeben sich übereinander liegende Kanäle für die beiden am Wärmeaustausch teilnehmenden Medien, also für das Reingas und das Rohgas. Während das eine Medium in den Strömungskanälen strömt, die jeweils durch die Plattenpaare P gebildet werden, strömt das andere Medium in den Strömungskanälen, die sich durch das Zusammenfügen der Plattenpaare P zum Plattenstapel S ergeben. Die in der Ebene der Längsränder 32 liegenden Querränder 36 der Einzelplatten 28 bilden hierbei den Zuströmquerschnitt Z₁ bzw. den Abströmquerschnitt A₁ der Strömungskanäle für das zwischen den Plattenpaaren P strömende Medium. Die in der Ebene der Anlageflächen 34 verlaufenden Querränder 38 der Einzelplatten 28 bilden die Zuströmquerschnitte Z₂ bzw. die Abströmquerschnitte A₂ für das andere Medium, das zwischen den Einzelplatten 28 jedes Plattenpaares P in Gegenrichtung zum ersten Medium strömt.

Fig. 3 ist eine perspektivische Ansicht eines Ausführungsbeispiels eines im Gegenstrom betriebenen Wärmetauschers 12, der in der in Fig. 1 dargestellten Vorrichtung 10 Verwendung findet. Der Plattenwärmetauscher 12 wird von oben nach unten von dem heißen, bereits gereinigten Reingas durchströmt, das mit der Bezugsziffer I bezeichnet ist, wobei das zu reinigende und zu erwärmende Rohgas, das mit der Bezugsziffer II bezeichnet ist, von unten nach oben durch den Wärmetauscher 12 geleitet wird. Der Wärmeaustausch zwischen den beiden Medien I und II findet in den Plattenstapeln S statt, die gemäß Fig. 2 aus zu Plattenpaaren P zusammengefaßten Einzelplatten 28 gebildet sind. Diese Plattenstapel S sind unmittelbar nebeneinander derart angeordnet, daß ihre Zuströmquerschnitte Z₁ und Z₂ auf gegenüberliegenden Seiten und diagonal zueinander versetzt angeordnet sind. Das Gleiche gilt für die Abströmquerschnitte A₁ und A₂.

Jeder Zuströmkanal Z₁ und Abströmkanal A₂ sowie jeder Zuströmkanal Z₂ und Abströmkanal A₁ sind jeweils durch eine Mittelwand 40 voneinander getrennt, die über die gesamte Länge des Plattenstapels S verläuft. Die Mittelwände 40 benachbarter Plattenstapel S sind jeweils durch eine Deckenwand 42 zu einem gemeinsamen Sammelkanal 44 verbunden.

Diese Sammelkanäle 40 stellen auf diese Weise eine Zufuhr bzw. Abfuhr des Reingases I bzw. Rohgases II zu bzw. von jeweils benachbarten zwei Plattenstapeln S dar.

Dem als Gegenstromwärmetauscher ausgebildeten Plattenwärmetauscher 12 gemäß Fig. 3 wird das heiße, bereits gereinigte Reingas I entlang des strichpunktierten Pfeils 46 von oben her zugeführt, und zwar durch einen nicht näher dargestellten Zuströmstutzen. Dieser Zuströmstutzen steht mit denjenigen Sammelkanälen 44 in Verbindung, die oberhalb der Zuströmquerschnitte Z₁ der Plattenstapel S münden. Beim Durchströmen jeweils benachbarter Plattenstapel S teilen sich die Ströme des Reingases I und gelangen in unterhalb der Plattenstapel S ausgebildete Sammelkanäle 44, die das Reingas I zum Abströmstutzen 41 führen, der beim Ausführungsbeispiel nach Fig. 3 unterhalb des Zuströmstutzens angeordnet ist.

Das wärmeaufnehmende Rohgas II tritt von unten her in den Zuströmstutzen 48 ein und gelangt von hier in die Sammelkanäle 44, die zu den Zuströmquerschnitten Z₂ der Plattenstapel S führen. Auch die Teilströme des Rohgases II werden in den Plattenstapel S geteilt und gelangen in Sammelkanäle 44, die wiederum zu einem Abströmstutzen 50 führen, der senkrecht oberhalb des Zuströmstutzens 40 ausgebildet ist. Um Totraumgebiete und unerwünschte Verwirbelungen innerhalb des Plattenwärmetauschers 12 zu vermeiden, sind die Deckenwände 42 der Sammelkanäle 44 schrägverlaufend ausgebildet, wie es deutlich im oberen Teil der Fig. 3 gezeigt ist.

Die Darstellung des Plattenwärmetauschers 12 in Fig. 3 läßt erkennen, daß sich trotz einer sehr kompakten und raumsparenden Bauweise eine gute Zugänglichkeit zu den Plattenstapeln S ergibt, die nicht nur den Einbau eventuell notwendig werdender Reinigungsvorrichtungen erleichtert, sondern einen guten Zugriff zu Reparaturen oder Wartungsarbeiten ermöglicht. Außerdem geschieht die Strömungsführung der beiden Medien I und II auf kürzestem Wege und ohne einen Druckverlust hervorrufende Umlenkungen, so daß der beschriebene Plattenwärmetauscher 12 trotz seiner Kompaktheit einen hohen Wirkungsgrad aufweist.

Es sollte klar sein, daß das zuvor beschriebene Ausführungsbeispiel nicht einschränkend ist und das Modifikationen und Änderungen vorgenommen werden können, ohne den Schutzbereich der vorliegenden Erfindung zu verlassen, der durch die beiliegenden Ansprüche definiert ist.

### B e z u g s z e i c h e n l i s t e

- 10: Vorrichtung
- 12: Wärmetauscher
- 14: Aufheizkanal
- 16: Katalysatoranordnung
- 18: Eintrittsöffnung
- 20: Heizeinrichtung
- 22: Mischeinrichtung
- 24: Umlenkhaube
- 26: Auslaßöffnung
- 28: Einzelplatten
- 30: Boden
- 32: Längsränder
- 34: Anlagefläche
- 36: Querränder
- 38: Querränder
- 40: Mittelwand
- 42: Deckenwand
- 44: Sammelkanal
- 46: Pfeil
- 48: Zuströmstutzen
- 50: Abströmstutzen
- S: Plattenstapel
- Z₁: Zuströmquerschnitt
- A₁: Abströmquerschnitt
- Z₂: Zuströmquerschnitt
- A₂: Abströmquerschnitt
- I: Reingas
- II: Rohgas

## Patentansprüche

1. Vorrichtung zur katalytischen Reinigung, insbesondere Entstickung, von Abgasen, die einen Wärmetauscher (12) zum Wärmeaustausch zwischen bereits gereinigtem Reingas und zu reinigendem Rohgas, einen sich an den Wärmetauscher (12) anschließenden Aufheizkanal (14), in dem dem Rohgas zusätzliche Wärme zugeführt wird, eine in dem Aufheizkanal (14) vorgesehene Eindüsungseinrichtung für die Zuführung von Ammoniak und eine sich an den Aufheizkanal (14) anschließende und oberhalb des Wärmetauschers (12) angeordnete, Katalysatoren aufweisende Katalysatoranordnung (16) umfasst,
wobei die Katalysatoranordnung (16) und der Aufheizkanal (14) durch eine im wesentlichen U-förmige Umlenkhaube (24) miteinander verbunden sind,
**dadurch gekennzeichnet,**
**dass** es sich bei dem Wärmetauscher (12) um einen im Gegenstrom betriebenen Wärmetauscher handelt und dass der Aufheizkanal (14) über Kompensatoren an der Umlenkhaube (24) und an dem Wärmetauscher (12) angeordnet ist, um thermischen Verzug zu kompensieren.

2. Vorrichtung nach Anspruch 1, wobei in dem Aufheizkanal (14) zumindest eine Heizeinrichtung (20) angeordnet ist.

3. Vorrichtung nach Anspruch 2, wobei es sich bei der Heizeinrichtung (20) um einen dampfbeheizten Gasvorwärmer, einen Gasbrenner oder eine Einrichtung zur Einmischung heißer Gase handelt.

4. Vorrichtung nach Anspruch 2 oder 3, wobei die Eindüsungseinrichtung in Strömungsrichtung hinter der Heizeinrichtung (20) angeordnet ist.

5. Vorrichtung nach einem der vorhergehenden Ansprüche, wobei in dem Aufheizkanal (14) wenigstens eine Mischeinrichtung (22) zur Durchmischung des Rauchgases mit dem zugeführten Ammoniak vorgesehen ist.

6. Vorrichtung nach Anspruch 5, wobei es sich bei der Mischeinrichtung (22) um wenigstens einen Strömungseinbau in Form einer Wirbeleinbaufläche handelt.

7. Vorrichtung nach Anspruch 5 oder 6, wobei die Mischeinrichtung (22) in Strömungsrichtung hinter der Eindüsungseinrichtung angeordnet ist.

8. Vorrichtung nach einem der vorhergehenden Ansprüche, wobei die Umlenkhaube (24) mit einem Strömungsquerschnitt ausgebildet ist, der im wesentlichen dem Querschnitt der in der Katalysatoranordnung (16) vorgesehenen Katalysatoren entspricht.

9. Vorrichtung nach einem der vorhergehenden Ansprüche, wobei in der Umlenkhaube (24) zumindest ein Strömungseinbau in Form einer Wirbeleinbaufläche zur Ausbildung eines gleichmäßigeren Strömungsprofils des Rauchgases angeordnet ist.

10. Vorrichtung nach einem der vorhergehenden Ansprüche, wobei es sich bei dem Wärmetauscher (12) um einen Plattenwärmetauscher handelt, der formgeprägte Einzelplatten (28) umfasst, die miteinander zu einen Strömungskanal für das eine Medium bildenden Plattenpaaren verbunden sind, die ihrerseits zu einem Plattenstapel (S) zusammengefügt sind und zwischen sich jeweils einen Strömungskanal für das andere Medium bilden, wobei der Zu- und Abströmquerschnitt (Z₁, A₁; Z₂, A₂) jedes Strömungskanals in Hauptströmrichtung diagonal zueinander versetzt sind und die Zu- und Abströmquerschnitte (Z₁, A₂; Z₂, A₁) der Kanäle für die beiden Medien nebeneinander liegen, jedoch um die halbe Höhe des Zu- bzw. Abströmquerschnittes der Kanäle zueinander versetzt sind, wobei eine Mehrzahl gleichartiger Plattenstapel (S) unmittelbar nebeneinander angeordnet ist, die Zu- und Abströmquerschnitte (Z₁, Z₂, A₁, A₂) jedes Plattenstapels (S) durch eine über die gesamte Stapellänge verlaufende Mittelwand (40) voneinander getrennt sind, die Mittelwände (40) benachbarter Plattenstapel (S) jeweils durch eine Deckenwand (42) zu einem gemeinsamen Sammelkanal (44) verbunden sind und diese Sammelkanäle (44) abwechselnd und unter Einbeziehung der Zu- bzw. Abströmquerschnitte der beiden endseitigen Plattenstapel (S) mit einem gemeinsamen Zuström- bzw. Abströmstutzen (48, 50) für jeweils eines der beiden Medien verbunden sind.

11. Vorrichtung nach Anspruch 10, wobei der Zuströmstutzen (48) der Abströmstutzen (50) für jedes Medium jeweils am anderen Ende der nebeneinander liegenden Plattenstapel (S) angeordnet sind.

12. Vorrichtung nach Anspruch 10 oder 11, wobei die Deckenwände (42) der Sammelkanäle (44) schrägverlaufend ausgebildet sind.

## Claims

1. Apparatus for the catalytic purification and particularly denitrification of exhaust gases, said apparatus comprising a heat exchanger (12) for exchanging heat between clean gas already purified and crude gas to be purified, a heating passage which joins the heat exchanger (12) and in which additional heat is supplied to the crude gas, an injection system provided in the heating passage (14) to supply ammonia, and a catalyst arrangement (16) comprising catalysts which joins the heating passage (14) and which is arranged above the heat exchanger (12), said catalyst arrangement (16) and said heating passage (14) being connected to each other by a substantially U-shaped return bonnet (24), **characterized in that** the heat exchanger (12) is a counter-flow heat exchanger and that the heating passage (14) is arranged at the return bonnet (24) and at the heat exchanger (12), in order to compensate thermal delay.

2. Apparatus according to claim 1, wherein at least one heating device (20) is arranged in the heating passage (14).

3. Apparatus according to claim 2, wherein the heating device (20) is a steam-heated gas preheating device, a gas burner or a system for admixing hot gases.

4. Apparatus according to claim 2 or 3, wherein the injection system is arranged in the flow direction after the heating device (20).

5. Apparatus according to one of the preceding claims, wherein in the heating passage (14) at least one mixing device (22) for mixing the smoke gas with the added ammonia is provided.

6. Apparatus according to claim 5, wherein the mixing device (22) is at least one flow insert in the form of a built-in vortex surface.

7. Apparatus according to claim 5 or 6, wherein the mixing device (22) is arranged in the flow direction after the injection system.

8. Apparatus according to one of the preceding claims, wherein the return bonnet (24) is designed with a flow cross-section which substantially corresponds to the cross section of the catalysts provided in the catalyst arrangement (16).

9. Apparatus according to one of the preceding claims, wherein in the return bonnet (24), at least one flow insert in the form of a built-in vortex surface is arranged for developing a uniform flow profile of the smoke gas.

10. Apparatus according to one of the preceding claims, wherein the heat exchanger (12) is a plate heat exchanger which comprises stamp-molded individual plates (28) that are connected to form plate pairs forming a flow passage for said one medium, the plate pairs on their part being combined into a plate stack (S) and respectively forming a flow passage for said other medium between them, wherein the inflow and outflow cross-sections (Z₁, A₁; Z₂, A₂) of each flow passage are diagonally offset to each other in the main flow direction and the inflow and outflow cross-sections (Z₁, A₂; Z₂, A₁) of the passages for both media are arranged in parallel, but are offset to each other by half the height of the inflow or outflow cross-section of the passages, wherein a plurality of similar plate stacks (S) is arranged directly side by side, wherein the inflow and outflow cross-sections (Z₁, Z₂, A₁, A₂) of each plate stack (S) are separated from each other by a central wall (40) extending over the entire length of the stack, wherein the central walls (40) of adjacent plate stacks (S) are respectively connected by a top wall (42) to form a common collective passage, and these collective passages (44) being connected to a common inflow or outflow port (48, 50) for a respective one of the two media while involving the inflow or outflow cross-sections of the two end-side plate stacks (S).

11. Apparatus according to claim 10, wherein the inflow port (48) and the outflow port (50) for each medium are each arranged at the far end of the parallel plate stacks (S).

12. Apparatus according to claim 10 or 11, wherein the top walls (42) of the collective passages (44) are designed to extend obliquely.

## Revendications

1. Dispositif pour l'épuration catalytique, en particulier pour la dénitruration des gaz d'échappement, qui comprend un échangeur thermique (12) pour l'échange thermique entre le gaz pur déjà épuré et le gaz brut à épurer, un conduit d'échauffement (14) qui se rattache à l'échangeur thermique (12), dans lequel de la chaleur additionnelle est amenée au gaz brut, un dispositif d'alimentation par tuyères prévu dans le conduit d'échauffement (14) pour l'alimentation d'ammoniac et un dispositif de catalyseurs (16), qui présente des catalyseurs, qui se rattache au conduit d'échauffement (14) et qui est placé au-dessus de l'échangeur thermique (12), le dispositif de catalyseurs (16) et le conduit d'échauffement (14) étant reliés l'un à l'autre par un capot de renvoi (24) substantiellement en forme d'U,
**caractérisé en ce**
**que,** pour l'échangeur thermique, il s'agit d'un échangeur thermique qui fonctionne à contre-courant et que le conduit d'échauffement (14) est placé par l'intermédiaire de compensateurs sur le capot de renvoi (24) et l'échangeur thermique (12) pour compenser la temporisation thermique.

2. Dispositif selon la revendication 1, au moins un dispositif de chauffage (20) étant placé dans le conduit d'échauffement (14).

3. Dispositif selon la revendication 2, cependant qu'il s'agit pour le dispositif de chauffage (20) d'un préchauffeur de gaz chauffé par vapeur, un brûleur à gaz ou un dispositif pour le mélange de gaz chauds.

4. Dispositif selon la revendication 2 ou 3, le dispositif d'alimentation par tuyères étant placé dans le sens de l'écoulement derrière le dispositif de chauffage (20).

5. Dispositif selon l'une des revendications précédentes, au moins un dispositif de mélange (22) pour mélanger intimement le gaz de fumée avec l'ammoniac qui a été amené étant prévu dans le conduit d'échauffement (14).

6. Dispositif selon la revendication 5, cependant qu'il s'agit pour le dispositif de mélange (22) d'au moins un montage d'écoulement en forme de surface d'entrée de turbulence.

7. Dispositif selon la revendication 5 ou 6, le dispositif de mélange (22) étant placé dans le sens de l'écoulement derrière le dispositif d'alimentation par tuyères.

8. Dispositif selon l'une des revendications précédentes, le capot de renvoi (24) étant configuré avec une section d'écoulement qui correspond substantiellement à la section des catalyseurs prévus dans le dispositif de catalyseurs (16).

9. Dispositif selon l'une des revendications précédentes, au moins un montage d'écoulement en forme de surface d'entrée de turbulence étant placé dans le capot de renvoi (24) pour configurer un profil d'écoulement uniforme du gaz de fumée.

10. Dispositif selon l'une des revendications précédentes, cependant qu'il s'agit pour l'échangeur thermique (12) d'un échangeur de chaleur à plaques qui comprend des plaques individuelles moulées par gaufrage (28) qui sont reliées l'une à l'autre en un conduit d'écoulement pour les paires de plaques qui forment un agent qui sont, à leur tour, assemblées en une pile de plaques (S) et qui forment entre elles respectivement un conduit d'écoulement pour l'autre agent, la section d'afflux et de décharge (Z₁, A₁; Z₂, A₂) de chaque conduit d'écoulement étant décalées l'une par rapport à l'autre en diagonale dans le sens principal d'écoulement et les sections d'afflux et décharge (Z₁, A₂; Z₂, A₁) des conduits pour les deux agents étant situées l'une à côté de l'autre tout en étant cependant décalées de la moitié de la hauteur de la section d'afflux ou de décharge des conduits, une multitude de piles de plaques du même type (S) étant placée directement les unes à côté des autres, les sections d'afflux et de décharge (Z₁, Z₂ ; A₁, A₂) de chaque pile de plaques (S) étant séparées l'une de l'autre par une paroi centrale (40) qui court sur toute la longueur de la pile, les parois centrales (40) de piles de plaques voisines (S) étant reliées respectivement par une paroi de couverture (42) en un conduit de collecte commun (44) et ces conduits de collecte (44) étant reliés en un conduit de collecte commun (44) et ces conduits de collecte (44) étant reliés en alternance et en intégrant les sections d'afflux ou de décharge des deux piles de plaques en extrémité (S) avec une tubulure commune d'afflux ou de décharge (48, 50) pour respectivement l'un des deux agents.

11. Dispositif selon la revendication 10, la tubulure d'afflux (48) et la tubulure de décharge (50) pour chaque agent étant placées respectivement à l'autre extrémité des piles de plaques (S) situées l'une à côté de l'autre.

12. Dispositif selon la revendication 10 ou 11, les parois de couverture (42) des conduits de collecte (44) étant configurées en biais.
